# EUROPEAN PATENT APPLICATION

(11) **EP 2 178 335 A1**
(43) Date of publication of application: **21.04.2010**
(21) Application number: 07792291.2
(22) Date of filing: 09.08.2007
(51) Int. Cl.: H04W 80/00

(54) **HANDOVER METHOD IN RADIO COMMUNICATION SYSTEM, RADIO BASE STATION, AND RADIO TERMINAL**

(71) Applicant: Fujitsu Limited, Kawasaki-shi, Kanagawa 211-8588 (JP)
(72) Inventor: HAYASHI, Ritsuo, Kawasaki-shi Kanagawa 211-8588 (JP); SUGIYAMA, Katsumasa, Kawasaki-shi Kanagawa 211-8588 (JP)
(74) Representative: Stebbing, Timothy Charles
(86) International application number: PCT/JP2007/065641
(87) International publication number: WO 2009/019789

(57) **Abstract**

In the method for handover of the present invention, a first wireless base station (1-1) sends a second wireless base station (1-2) first forward order information provided to the first data destined for a wireless terminal (3); and the second wireless base station (1-2) sends the wireless terminal (3) the first data forwarded from the first wireless base station (1-1) and provides second forward order information obtained through adding an offset value to the first forward order information to second data which the second wireless station (1-2) has received from the upper apparatus (2) and which is destined for the wireless terminal (3). This configuration makes the second wireless base station (1-2) possible to send the wireless terminal (3) packets received from the upper apparatus (2) before the completion of forwarding the first data from the first wireless base station (1-1).

## Description

### Technical Field

The present invention relates to a method for handover in a wireless communication system, a wireless base station, and a wireless terminal. The present invention is preferably applied to, for example, an LTE (Long Term Evolution) system being examining as a next-generation mobile communication system.

### Background Art

In accordance with explosive spread of mobile communication services, traffics in a network have a tendency to increase. To deal with the increase, W-CDMA has been introduced as the access scheme for the third-generation mobile communication, and HSDPA (High Speed Downlink Packet Access) has appeared as a standard for handling high-speed data in W-CDMA.

The next-generation mobile communication system has started examination of an LTE system which is further evolved from HSDPA and which makes downlink communication of 100 Mbps at the maximum (14 Mbps at the maximum in HSDPA).

The functions related to handover and the controlling scheme in the LTE system are discussed in a standardization meeting, and the specification thereof is now being developed in parallel with the discussion. The specification of handover being discussed and developed in the standardization meeting has a procedure of: forwarding data destined for a terminal (User Equipment: UE), serving as the subject of the handover, from the handover source base station to the handover target base station (packet forwarding); and transmitting the forwarded data to the UE by the target base station (see Non-Patent Document 1 below). Patent Document 1 listed below discloses a similar technique.

In the manner disclosed in Non-Patent Document 1, the target base station retains (buffers) packets from a core network system apparatus (upper apparatus), called an MME (Mobility Management Entity) or a Serving Gateway (S-GW) , until a last forwarding packet detection timer (T1) (hereinafter called the T1 timer) expires. The specification is that, after the target base station sends the UE all the packets forwarded to the target base station from the target source station, sending of the currently-buffered packets from the upper apparatus (hereinafter also called, an upper node) is started, so that packets from the upper node are not sent to the UE prior to the forwarding packets from the source base station. [Patent Document 1] Japanese Patent Publication No. 2004-282652
[Non-Patent Document 1] 3GPP TS36.300 V8.1.0(2007-06)

### Disclosure of the Invention

### Issues to be Solved by the Invention

However, the above handover scheme causes delay in forwarding of packets sent from the upper node to the UE because the target base station does not send the packets from the upper node to the UE unless the T1 timer expires even when there is no forwarding packet from the source base station.

One of the obj ects of the present invention is to reduce such delay in data forwarding.
Another object is to maintain a forward order number (sequence number) system between data forwarded from the source base station to the target base station and data sent from the upper apparatus to the target base station.

Besides the above objects, the remaining objects can be derived from the configuration of an embodiment that will be detailed below, but cannot be attained by the prior techniques.

### Means to Solve the Issues

In order to attain the above objects, the present invention uses "the method for handover in a wireless communication system, the wireless base station, and the wireless terminal" below.

(1) Firstly, the method for handover in a wireless communication system of the present invention wherein, during a handover process in which a wireless terminal changes a communication destination from a first wireless base station to a second wireless base station, first data which the first wireless base station has received from an upper apparatus but which the first wireless base station has not finished sending to the wireless terminal is forwarded to the second wireless base station, the method including: at the first wireless base station, sending the second wireless base station first forward order information provided to the first data; at the second wireless base station, sending the wireless terminal the first data forwarded from the first wireless base station; proving second forward order information obtained through adding an offset value to the first forward order information to second data which the second wireless station has received from the upper apparatus and which is destined for the wireless terminal; and sending the wireless terminal the second data along with the second forward order information.

(2) Here, the first wireless base station preferably sends, as the first forward order information, a maximum forward order provided to the first data to the second wireless base station.

(3) In addition, the first wireless base station may send the second wireless station information about one of or both an amount of buffering of the first data and a receiving rate of the first data when received from the upper apparatus, and the second wireless base station may estimate, based on the information received from the first wireless base station, a first amount of the first data that is to be forwarded from the first wireless base station; and determines the offset value based on the result of the estimating.

(4) Further, the second wireless base station may calculate a difference between the determined offset value and the first amount of the first data forwarded from the first wireless base station; create empty data having an amount corresponding to the difference; successively provide third forward order information in a range of occupying the offset value to the empty data; and send the wireless terminal the empty data along with the third forward order information.

(5) Still further, the second wireless base station may calculate a difference between the determined offset value and the first amount of the first data forwarded from the first wireless base station; and send the wireless terminal notification information notifying that an amount of data corresponding to the difference does not exist.

(6) Still further, the wireless terminal may skip reception processing for a time period corresponding to the time for which the wireless terminal receives empty data having an amount corresponding to the difference.

(7) Secondly, a method for handover in a wireless communication system of the present invention wherein, during a handover process in which a wireless terminal changes a communication destination from a first wireless base station to a second wireless base station, first data which the first wireless base station has received from an upper apparatus but which the first wireless base station has not finished sending to the wireless terminal is forwarded to the second wireless base station, the method including: at the first wireless base station, notifying the second wireless base station of information about a state of buffering of the first data destined for the wireless terminal; at the second wireless base terminal, estimating, based on the information notified from the first wireless base station, a first amount of the first data that is to be forwarded from the first wireless base station; controlling, based on the result of the estimating, a sending start timing at which second data which has been received from the upper apparatus and which is destined for the wireless terminal is sent to the wireless terminal.

(8) Thirdly, a wireless base station of the present invention used in a wireless communication system in which, during a handover process in which a wireless terminal changes a communication destination from the first wireless base station to a second wireless base station, first data which the first wireless base station has received from an upper apparatus but which the first wireless base station has not finished sending to the wireless terminal is forwarded to the second wireless base station, the first wireless base station including: forward order information providing means which provides first forward order information to the first data received from the upper apparatus; and sending means which sends the first forward order information provided by the forward order information providing means to the second wireless base station.

(9) Here, the sending means preferably sends, as the first forward order information, a maximum forward order which has been provided to the first data to the second wireless base station.

(10) In addition, the wireless base station may further include a buffer which stores the first data received from the upper apparatus, and the sending means may send the second wireless base station information about an amount of the first data in the buffer and about a receiving rate of the first data when received from the upper apparatus.

(11) Fourthly, a wireless base station used in a wireless communication system in which, during a handover process in which a wireless terminal changes a communication destination from first wireless base station to a second wireless base station, first data which the first wireless base station has received from an upper apparatus but which the first wireless base station has not finished sending to the wireless terminal is forwarded to the second wireless base station, the second wireless base station including: receiving means which receives, from the first wireless base station, first forward order information that the first wireless base station has provided to the first data from the first wireless base station; forward order information providing means which provides second order information obtained through adding an offset value to the first forward order information to second data which the second wireless base station has received from the upper apparatus and which is destined for the wireless terminal; and sending means which sends the wireless terminal the first data forwarded from the first wireless base station and the second data to which the forward order information providing means has provided the second forward order information.

(12) Here, the receiving means may receive information about an amount of buffering of the first data in the first wireless base station and about a receiving rate of the first data when the first wireless base station has received the first data from the upper apparatus; and the forward order information providing means may include an estimating unit which estimates, based on the information received from the first wireless base station, a first amount of the first data that is to be forwarded from the first wireless base station; and a determining unit which determines the offset value based on the result of the estimating by estimating unit.

(13) In addition, the forward order information providing means may further include: a difference calculating unit which calculates a difference between the first amount estimated by the estimating unit and an amount of the first data which has been forwarded from the first wireless base station and which has been received by the receiving means; and an empty data creating unit which creates empty data having an amount corresponding to the difference, and the forward order information providing means may successively provide third forward order information in a range of occupying the offset value to the empty data.

(14) Further, the forward order information providing means may include: a difference calculating unit which calculates a difference between the first amount estimated by the estimating unit and an amount of the first data which has been forwarded from the first wireless base; and a notifying unit which sends the wireless terminal notification information notifying that an amount of data corresponding to the difference does not exist.

(15) Fifthly, a wireless terminal of the present invention used in a wireless communication system wherein, during a handover process in which the wireless terminal changes a communication destination from a first wireless base station to a second wireless base station, first data which the first wireless base station has received from an upper apparatus but which has not finished sending to the wireless terminal is forwarded to the second wireless base station, the wireless terminal including: receiving means which receives, from the second wireless base station, notification information notifying that an amount of data corresponding to a difference between an offset value of forward order information of the first data and the first data forwarded form the first wireless base station does not exist; and reception control means which skips reception processing that is to be performed on the data which does not exist based on the notification information.

### Effect of Invention

The present invention can reduce delay in data forwarding to the wireless terminal during a handover process.
In addition, a forward order number (sequence number) system between first data forwarded from the first base station serving as the source base station of the wireless terminal to the second base station serving as the target base station of the wireless terminal and the second data sent from the upper apparatus to the second base station can be maintained.

### Brief Description of the Drawings

[Fig. 1] A diagram illustrating the configuration of an LTE system according to a first embodiment of the present invention;
[Fig. 2] A functional block diagram illustrating a configuration of a wireless base station (eNB) illustrated in Fig. 1;
[Fig. 3] A functional block diagram illustrating a configuration of a wireless terminal (UE) illustrated in Fig. 1;
[Fig. 4] A diagram denoting a sequence explaining a method for handover in the LTE system of Fig. 1;
[Fig. 5] A diagram illustrating an image of packet forwarding before handover for explanation of a method for the handover in the LTE system of Fig. 1;
[Fig. 6] A diagram illustrating an image of packet forwarding immediately after the handover for explanation of a method for the handover in the LTE system of Fig. 1;
[Fig. 7] A diagram illustrating an image of packet forwarding at a specified time after the handover process for explanation of a method for the handover in the LTE system of Fig. 1; and
[Fig. 8] A diagram illustrating an image of packet forwarding after the handover for explanation of a method for the handover in the LTE system of Fig. 1.

### Description of Reference Characters

- 1, 1-1, 1-2: wireless base station
- 11: antenna
- 12: S1 (base station-gateway) interface
- 13: X2 (between base stations) interface
- 14: packet buffer
- 15: wireless interface controller
- 16: S1 interface controller
- 17: X2 interface controller
- 18: signal message controller
- 19: user packet controller
- 20: forwarding estimating controller
- 21: estimated difference correction controller
- 2: gateway node (upper apparatus)
- 3: wireless terminal (UE)
- 31: antenna
- 32: wireless interface controller
- 33: packet buffer
- 34: signal message controller
- 35: user packet controller
- 36: packet-skip-notifying-signal decoder
- 37: receiving window controller
- 38: application controller

### Best Modes for Carrying Out the Invention

Hereinafter, an embodiment of the present invention will now be described with reference to the drawings. However, the present invention is not limited to the embodiment to be detailed below and, needless to say, can be variously modified without departing from the gist of the present invention.

### (1) first embodiment:

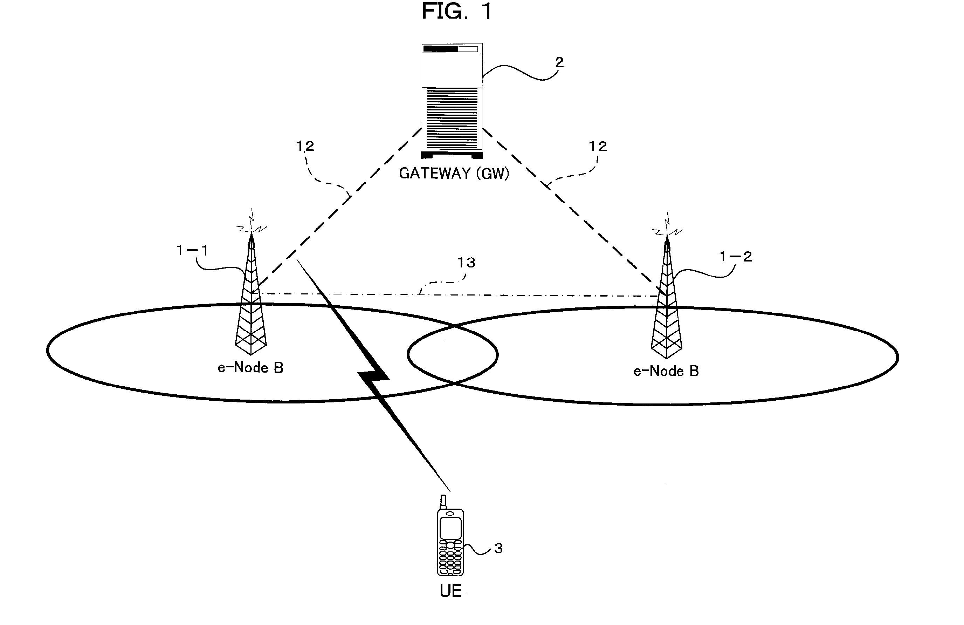

Fig. 1 is a diagram illustrating the configuration of an LTE system serving as a wireless communication system according to the first embodiment of the present invention. The LTE system of Fig. 1 includes a number (here, two) of wireless base stations (eNBs: evolved Node B) 1-1 and 1-2, one or more wireless terminals (UEs) 3, and a gateway (GW) node 2 serving as an upper apparatus (node) of the wireless base stations (hereinafter called the wireless base stations 1 when one is not discriminated from the other) .

The wireless base station 1 assumes to be an eNB for an LTE having a part or the entire of the function of the radio network controller (RNC), but may be a base station of a prior generation (i.e., the function of RNC is not incorporated) to the LTE. In the latter case, the RNC corresponds to the upper apparatus of the wireless base stations 1.

Each of the wireless base stations (hereinafter simply called base stations) 1-1 and 1-2 is able to communicate via an S1 interface serving as GW-eNB interface, and the base stations 1-1 and 1-2 are communicably coupled with each other via an X2 interface serving as an interface between eNBs.

The UE 3 is capable of wireless communicating with the base stations 1-1 and 1-2 in the respective communication areas.

When the UE 3 moves, for example, from the communication area of the base station 1-1 to that of the base station 1-2, the source base station (source eNB) 1-1 forwards data destined for the UE 3 to the target base station (target eNB) 1-2 (packet forwarding) and the handover target base station 1-2 sends the UE 3 the forwarded data.

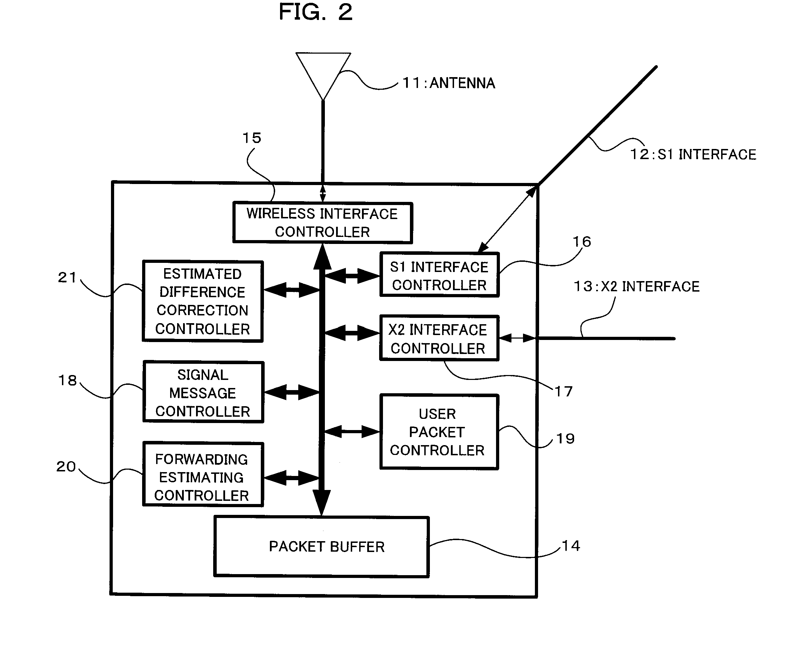

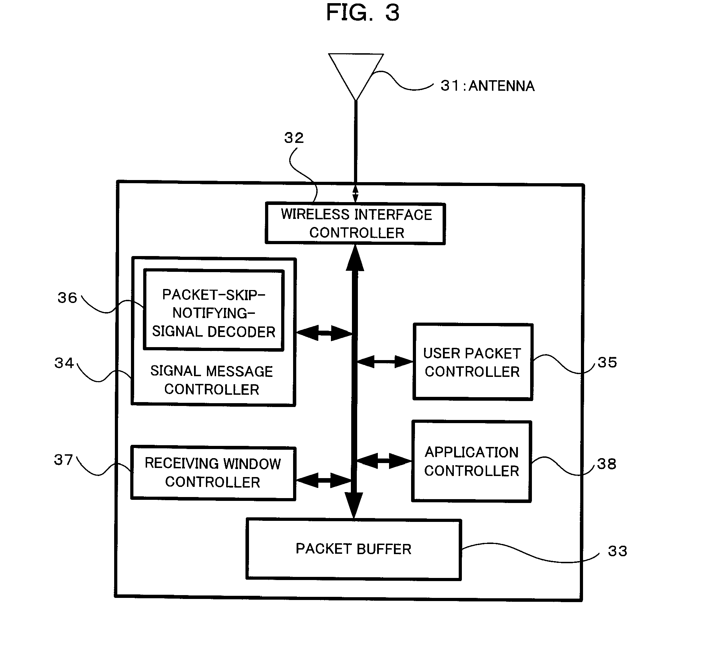

For the above, the base station 1 has the configuration illustrated in Fig. 2 and the UE 3 has the configuration illustrated in Fig. 3, for example.

### (description of the base station 1)

Namely, the base station 1 includes, for example, an antenna 11, an S1 interface 12, an X2 interface 13, a packet buffer 14, a wireless interface controller 15, an S1 interface controller 16, an X2 interface controller 17, a signal message controller 18, a user packet controller 19, a forwarding estimating controller 20, and an estimated difference correction controller 21, as depicted in Fig. 2.

Here, the antenna 11 sends downlink (DL) packets destined for the UE 3 through wireless signals while receives uplink (UL) packets from the UE 3 through wireless signals. The wireless interface controller 15 controls the wireless communication through the antenna 11, and has a specified transmission/reception function.

For example, the transmission processing (function) includes encoding of downlink packet (data) destined for the UE 3, modulation through the use of QPSK, 16QAM, and others, DA conversion, frequency conversion (up-conversion) from a baseband frequency to a wireless frequency, power amplification to a specified transmission power, and others. The reception processing (function) includes low-noise amplification on an uplink packet received through a wireless signal from the UE 3, frequency conversion (down-conversion) from a wireless frequency to a baseband frequency, AD conversion, demodulation, decoding, and others.

The S1 (base station - gateway) interface 12 serves as a communication interface with the gateway node 2, and the S1 interface controller 16 has a function (protocol conversion function or the like) for controlling communication through the S1 interface 12 with the gateway node 2 (such as transmission/receiving of control signals for a handover process).

The X2 (base station - base station) interface 13 serves as a communication interface with another base station 1, and the X2 interface controller 17 has a function (protocol conversion function) for controlling communication through the X2 interface 13 with another base station 1 (such as transmission/receiving of control signals for a handover process).

The packet buffer 14 stores therein a downlink packet (user packet) which is received from the gateway node 2 and which is destined for the UE 3, and an uplink packet (user packet) which is received from the UE 3 and which is destined for the gateway node 2.

The user packet controller (forward information providing means) 19 has functions for control writing/reading a user packet into/from the packet buffer 14, providing forward order information (number) to a user packet, creating an empty user packet (dummy packet) in response to an instruction from the estimated difference correction controller 11 (sic, correctly 21). A dummy packet here means a user packet which has a user data portion in the state of NULL (i.e., empty) but to which a forward order number is provided.

The signal message controller 18 has functions of transmission/reception of signal messages (including control signals for a handover process) used in various communications through the wireless interface controller 15, the S1 interface controller 16, and the X2 interface controller 17 and of analysis of the contents of the messages. In the first embodiment, the signal message controller 18 also has functions of embedding information (forwarding packet information) to make a target base station 1 to estimate an amount of forwarding packets into a control signal (a HANDOVER REQUEST signal) that is to be transmitted to the target base station 1 through the X2 interface 13, and of creating a packet skip signal that is to be detailed below.

Here, the forwarding packet information includes an information piece depending on the time required for a handover process, which information piece is exemplified by QoS information being used by the UE 3 undergoing the handover processing, the number of packets remaining in the packet buffer 14 of the source base station 1 (i.e., information about a buffering state), and the maximum value of the forward order numbers (sequence numbers) provided to the remaining packets.

The forwarding estimating controller 20 has functions as: an estimating unit which estimates an amount of packets that are to be forwarded (packet forwarding) from the handover source base station 1 on the basis of the forwarding information (hereinafter also called notification information) notified from the handover source base station 1; a determining unit which determines the forward order numbers (offset values) that are to be provided to downlink packets which have been received from the gateway node 2 and which are destined for the UE 3; and has a function for instructing the user packet controller 19 to provide the determined forward order numbers to the packets which have been received from the gateway node 2 and which are destined for the UE 3.

The estimated difference correction controller 21 calculates the difference of an estimated value of the amount of forwarding packets estimated by the forwarding estimating controller 20 and the amount of forwarding packets that have been actually received from the handover source base station 1, and causes the user packet controller 19 to create one or more empty (dummy) packets which occupies the calculated difference or causes the signal message controller 18 to create and send a packet skip notification signal that notifies the UE 3 that a process for receiving an amount of downlink packets corresponding to the calculated difference can be eliminated (can be skipped).

The user packet controller 19, the forwarding estimating controller 20, and the estimated difference correction controller 21 are defined as elements of the forward number information providing means which provides forward order number obtained by adding thereto the offset value with packets which have been received from the gateway node 2 and which are destined for the UE 3.

### (description of UE 3)

As illustrated in Fig. 3, the UE 3 of the first embodiment includes, for example, an antenna 31, a wireless interface controller 32, a packet buffer 33, a signal message controller 34, a user packet controller 35, a packet-skip-notifying-signal decoder 36, a receiving window controller 37, and an application controller 38, as depicted in Fig. 3.

Here, the antenna 31 sends uplink packets destined for a base station 1 through wireless signals while receives downlink packets from the base station 1 through wireless signals. The wireless interface controller 32 controls the wireless communication through the antenna 31, and has a specified transmission/reception function.

For example, the transmission processing (function) includes encoding of uplink packet (data) destined for a base station 1, modulation through the use of QPSK, 16QAM, and others, DA conversion, frequency conversion (up-conversion) from a baseband frequency to a wireless frequency, power amplification to a specified transmission power, and others. The reception processing (function) includes low-noise amplification on a downlink packet received through a wireless signal from the base station 1, frequency conversion (down-conversion) from a wireless frequency to a baseband frequency, AD conversion, demodulation, decoding, and others.

The packet buffer 33 stores therein a downlink packet (user packet) which is received from the base station 1 and an uplink packet (user packet) which is destined for the base station 1. The user packet controller 35 controls writing/reading user packets into/from the packet buffer 33.

The signal message controller 34 has functions of transmitting and receiving signal messages (including controlling signals used in a handover process) that are to be used in wireless communication through the wireless interface controller 32, and of analysis of such signal messages.

The packet-skip-notifying-signal decoder 36 decodes the packet skip notification signal from the wireless base station 1.

The receiving window controller 37 has functions of controlling (window controlling) the application controller 38 to re-order the forward order of user packets on the basis of the forward order numbers assigned to individual user packets stored in the packet buffer 33. In this embodiment, the receiving window controller 37 also has functions of deleting forward order numbers before the re-ordering and of discarding the dummy packets.

The application controller 38 controls various applications that the UE 3 can use. Data created as the results of execution of the applications and data received from the wireless base station 1 are regarded as user packets and are stored in the packet buffer 33.

### (description of a handover process)

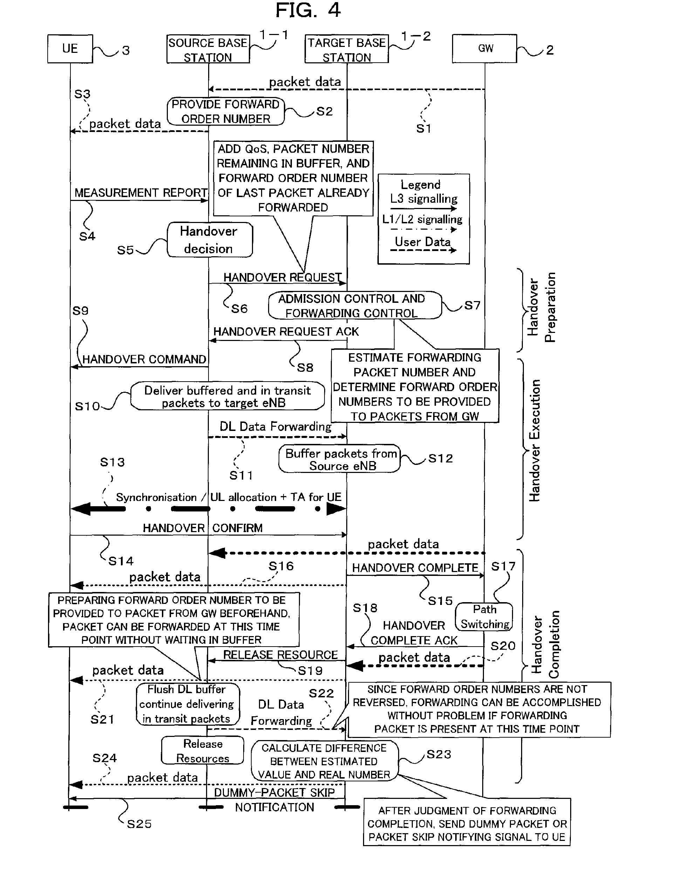

Hereinafter, description will now be made in relation to a handover process performed in the LTE system having the above configuration with reference to Figs. 4-8. The following description assumes that the UE 3 moves from the communication area of the base station (a first wireless base station) 1-1 to the communication area of the base station (a second wireless base station) 1-2. The base station 1-1 and the base station 1-2 are respectively called the source base station and the target base station.

Fig. 4 adopts the description of Fig. 10.1.2.1 in Chapter 10.1.2.1.1 of the above Non-Patent Document 1. A signal (message) represented by a solid arrow is signaling on Layer 3 (L3); a signal (message) represented by a one-dotted broken arrow is signaling on Layer 1 or Layer 2 (L1/L2); and a signal represented by a dotted line is user data (user packet).

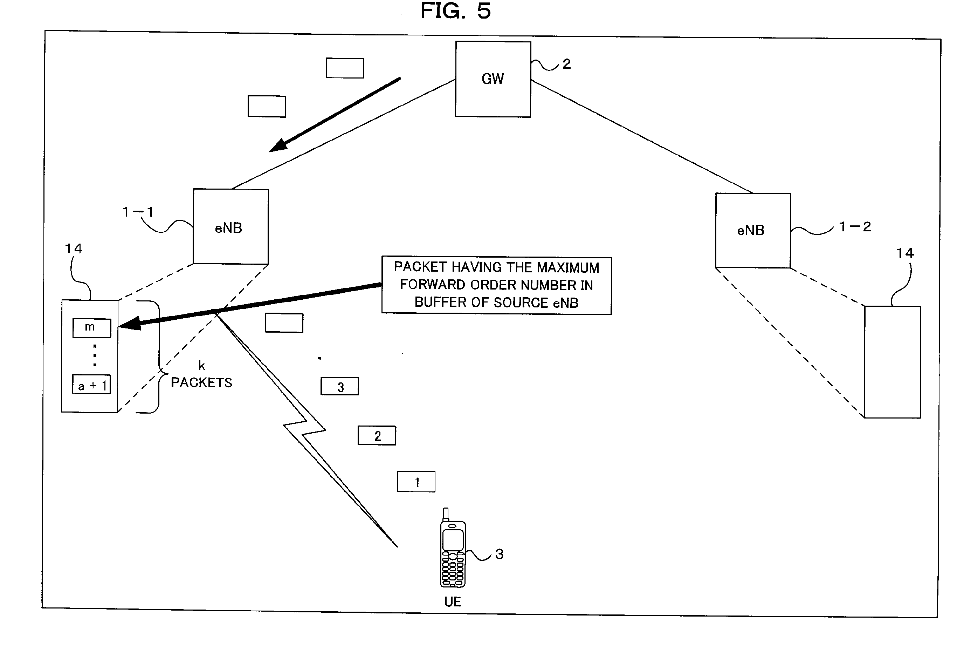

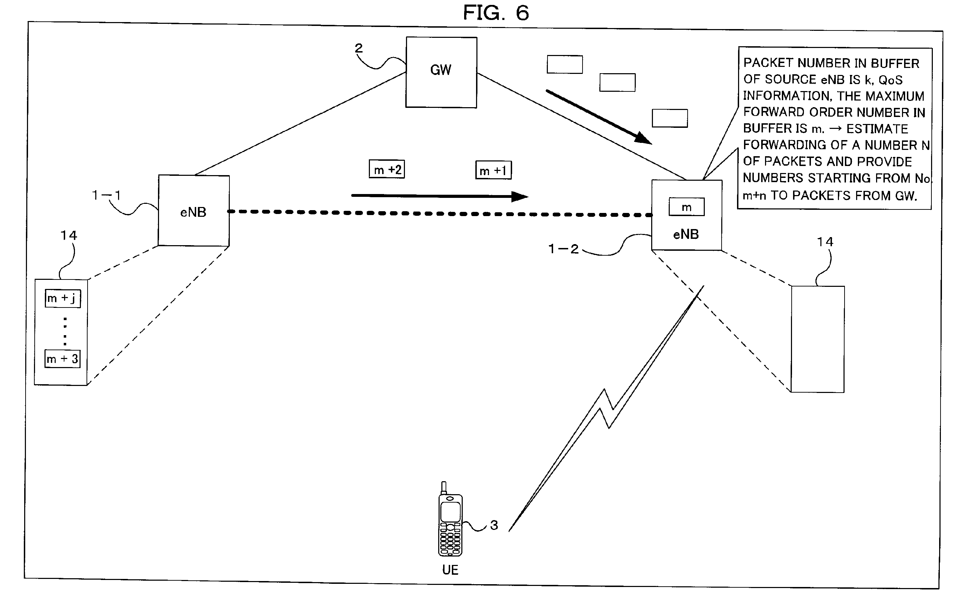

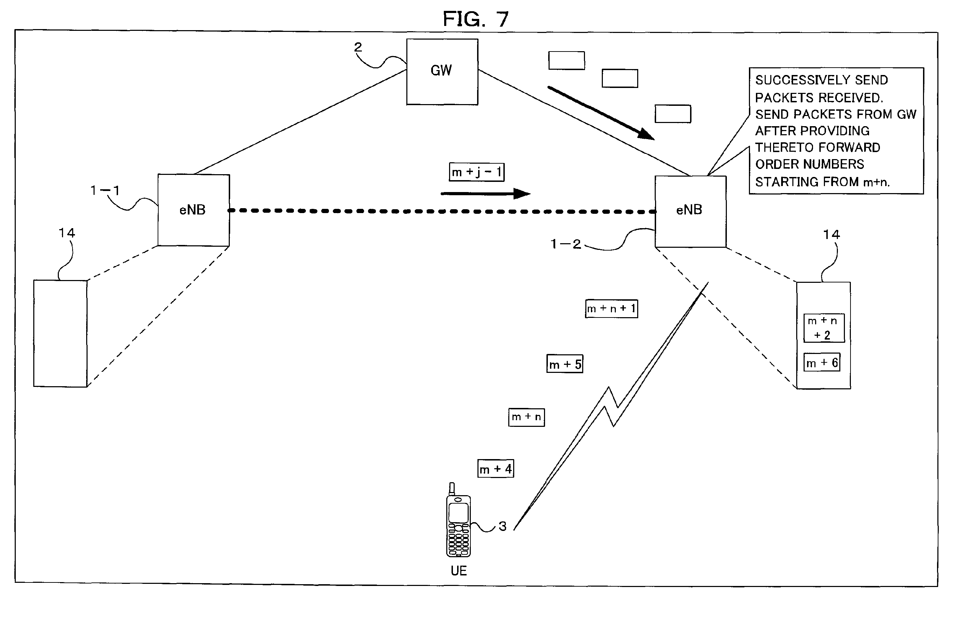

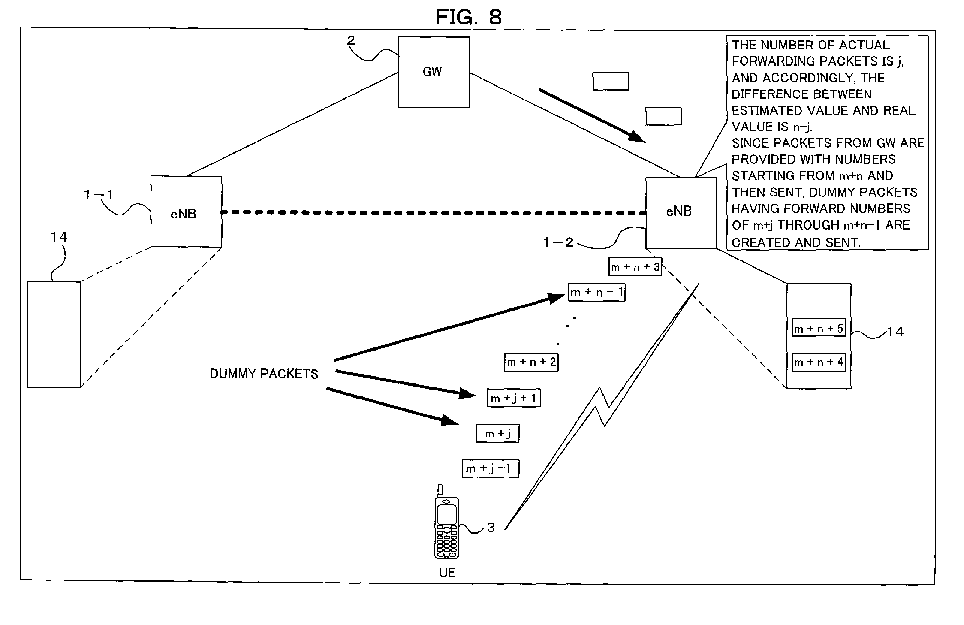

In addition, Fig. 5 is an image of packet forwarding before the handover (i.e., step S6 and therebefore in Fig. 4); Fig. 6 is an image of packet forwarding immediately after the handover (i.e., immediately before step S20 in Fig. 4); Fig. 7 is an image of packet forwarding after passing a specified time period from the handover process (i.e., immediately before the judgment of the completion of packet forwarding, immediately before step S23 of Fig. 4); and Fig. 8 is an image of packet forwarding after the handover (i.e., the completion of packet forwarding, step S23 and thereafter in Fig. 4).

As depicted in Figs. 4 and 5, the source base station 1-1 causes the user packet controller 19 to provide packets which are destined for the UE 3 and which have been received from the gateway node 2 of forward order numbers with which the UE 3 can re-order packets, and sends downlink packets (steps S1, S2, and S3).

The source base station 1-1 receives a signal of MEASUREMENT REPORT from the UE 3 and analyzes the contents of the signal in the signal message controller 8 (*sic,* correctly 18), so that the source base station 1-1 detects the movement of the UE 3 to the communication area of the target base station 1-2 (steps S4 and S5).

After that, the source base station 1-1 causes the signal message controller 8 (*sic,* correctly 18) to create a signal of HANDOVER REQUEST to the target base station 1-2, and sends the target base station 1-2 the created signal through the X2 interface 13 under the control of the X2 interface controller 17 in order to request the execution of a handover process (step S6).

At that time, the signal message controller 18 of the source base station 1-1 adds forwarding packet information (QoS information being used by the UE 3 that is the subject of the handover; the remaining packet number representing the number of packets remaining in the packet buffer 14 of the source base station 1-1; and the maximum number of forward order numbers used (provided) by the source base station 1-1) to the handover request signal.

In the first embodiment, the remaining packet number and the maximum number (the maximum forwarding order number) of the forward order numbers assigned to the remaining packets are respectively represented by k and m (see Fig. 5). Here, the number "m" is preferably identical to the number provided to the last packet which has not have sent to the UE 3 yet among packets remaining in the packet buffer 14 of the source base station 1-1.

For the above, the signal message controller 18 of the source base station 1-1 functions as, in cooperation with the X2 interface controller 17, sending means which sends the target base station 1-2 the forward order number (the maximum forward order number) that the user packet controller 19 has provided to a user packet.

In the meantime, upon receipt of the handover request signal through the X2 interface 13 and the X2 interface controller 17, the target base station 1-2 decodes the handover request signal in the signal message controller 18, and sends the forwarding estimating controller 20 the forwarding packet information included in the handover request signal. Namely, the X2 interface 13 and the X2 interface controller 17 of the target base station 1-2 function as receiving means which receives, from the source base station 1-1, forward order numbers that the source base station 1-1 has provided to packets destined for the UE 3.

The forwarding estimating controller 20 estimates the number n of packets (the offset value) that are to be forwarded from the source base station 1-1 on the basis of the QoS information and the remaining packet number k in the packet buffer 14 of the source base station 1-1 which have been received, and determines forward order numbers that are to be provided to downlink packets which have been received from the gateway node 2 and which are destined for the UE 3 that is the subject of the handover on the basis of the result of the estimation (step S7).

Here, the estimated packet number n is preferably determined to be a value having an appropriate allowance in order to avoid reversal and redundancy among forward order numbers which the source base station 1-1 has already provided to packets to be forwarded and forward order numbers which are to be provided to packets sent from the gateway node 2.

For example, under an assumption that a time required for a handover process is 100 ms, since monitoring of an amount of traffic (receiving rate) flowing from the gateway node into the source base station 1-1 results in 10 packet flowing into the source base station 1-1 over the handover process in a case of 1 packet per 10 ms, the estimated packet number n is preferably set to be a value k+12 which is the sum of addition of the value 12 which is a little larger than the value 10 to the remaining packet number in the packet buffer 14. Alternatively, the application used by the UE 3 is specified, from the QoS information, and if the application is the VoIp, the estimated packet number (offset value) may determined to be the value k+6 on the basis of the rate of 1 packet per 20 ms.

In other words, the target base station 1-2 receives information about the remaining packet number k in the packet buffer 14 and the receiving rate of packets from the gateway node 2 by the source base station 1-1 through the handover request signal from the source base station 1-1, and estimates, on the basis of the received information, the number of packets that are to be forwarded from the source base station 1-1.

Then, since the maximum number of the forward order numbers that the source base station 1-1 has assigned is the value m, the target base station 1-2 assigns the numbers starting from m+n obtained through adding the estimated packet number n to the value m to packets which have been received from the gateway node 2 and which are destined for the UE 3 (see Fig. 6).

After that, when the preparation for handover is ready, the target base station 1-2 causes the signal message controller 18 to create a signal of HANDOVER REQUEST ACK that acknowledges the handover request to the source base station 1-1 and reply to the source base station 1-1 with the created signal through the X2 interface 13 (step S8) .

Upon receipt of the HANDOVER REQUEST ACK signal from the target base station 1-2, the source base station 1-1 creates a signal of HANDOVER COMMAND destined to the UE 3, sends the created signal to the UE 3 from the antenna 11 to request the UE 3 to synchronize with the target base station 1-2 (step S9). Further, the source base station 1-1 starts packet forwarding in which packets destined for the UE 3 are forwarded to the target base station 1-2 through the use of the user packet controller 19 and the X2 interface controller 17 (steps S10 and S11).

The target base station 1-2 temporarily stores packets forwarded from the source base station 1-1 into the packet buffer 14 (step S12).

In the meantime, after the wireless interface controller 32 completes the synchronization process with the target base station 1-2 and an allocation process of a wireless resource of UL so that the UE 3 is ready for receiving packets from the target base station 1-2 (step S13), the signal message controller 34 of the UE 3 creates a signal of HANDOVER CONFIRM destined for the target base station 1-2 and sends the target base station 1-2 the created signal from the antenna 31 (step S14).

Upon receipt of the handover confirmation signal from the UE 3, the target base station 1-2 causes the signal message controller 18 to create a signal of HANDOVER COMPLETE destined for the gateway node 2, and sends the gateway node 2 the created signal through the S1 interface 12 (step S15). Upon receipt of the handover confirmation signal, the target base station 1-2 comes to be ready for sending the UE 3 packets forwarded from the source base station 1-1 (step S16) .

At this time, the gateway node 2 receives the handover completion signal from the target base station 1-2, responsively changes the sending destination of the packets destined for the UE 3 from the source base station 1-1 to the target base station 1-2 (step S17) and sends the target base station 1-2 a signal of HANDOVER COMPLETE ACK that acknowledges the handover (step S18).

Upon receipt of the handover acknowledgement signal from the gateway node 2, the target base station 1-2 causes the signal message controller 18 to create a signal of RELEASE RESOURCE for releasing the wireless resource of the source base station 1-1 of the call, that is the subject of the handover, and sends the source base station 1-1 the created signal through the X2 interface 13 (step S19).

The target base station 1-2 provides forward order numbers determined in step S7 to packets for UE 3 which are sent from the gateway node 2 by the forwarding estimating controller 20, and sends the UE 3 the packets through the wireless interface controller 15 (see Fig. 7).

At this time, packets forwarded from the source base station 1-1 are sent to the UE 3, but are not waited in the packet buffer 14 for a specified time because forward order numbers are provided to all the packets so that all the packets can be successively sent to the UE 3 (steps S20, S21, and S22).

In other words, the forwarding estimating controller 20 of the target base station 1-2 functions as forward order information providing means that provides packets which have been received from the gateway node 2 and which are destined for the UE 3 of forward order numbers obtained by adding the offset value to the forward order numbers received (notified) from the source base station 1-1.
Further, the wireless interface controller 15 of the target base station 1-2 functions as sending means that sends the UE 3 packets forwarded from the source base station 1-1 and packets from the gateway node 2 to which packets the forward order numbers containing the offset value are provided.

After that, the target base station 1-2 judges the end of the packet forwarding from the source base station 1-1. A method for judging the end of the packet forwarding may link the forwarding number counter and the last forwarding packet detection timer (T1 timer), and determines the end when the number counter reaches the estimated packet number n in a specified time period, or may alternatively determine the end when the T1 timer expires.

After the judgment of the end, the target base station 1-2 causes the estimated difference correction controller 21 (difference detector) to calculate the difference between the estimated packet number n and the real number of packets that have actually been forwarded from the source base station 1-1 (step S23). For example, when the forward order numbers are prepared (reserved) correspondingly to the estimate packet number n but the real forwarding packets are the number j, the difference is n-j.

Then, the estimated difference correction controller 21 of the target base station 1-2 demands that the user packet controller 19 creates dummy packets to absorb the difference n-j. In the first embodiment, as depicted in Fig. 8, since packets which have been received from the gateway node 2 and which are destined for the UE 3 are provided with forward order numbers starting fromm+n, the user packet controller 19 (empty data creating unit) n-j dummy packets, i.e., packets provided with forward order numbers m+j through m+n-1 are and sends the dummy packets to the UE 3 (step S24).

A dummy packet has a user data portion in the state of NULL and is provided only with a forward order number. The UE 3 receives the dummy packet in the user packet controller 35 and temporarily buffers in the packet buffer 33.

Then, following an instruction from the receiving window controller 37, the packets in the packet buffer 33 are re-ordered in forward order numbers, which numbers are then deleted from the packets. At this time, the dummy packets having empty user data portions are discarded as being stored in the packet buffer 33. Consequently, only non-dummy packets are sent to the application controller 38 in the order after the above re-ordering.

As alternative to the use of dummy packets, the signal message controller 18 of the target base station 1-2 may create a packet skip notification signal (notification information) which means that "packets having forward order numbers of m+j through m+n-1 do not exist and the reception processing for these packets can be skipped" and send the created message to the UE 3 through the wireless interface controller 15 (step S25).

In this alternative case, the UE 3 decodes the packet skip notification signal in the packet-skip-notifying-signal decoder 36, thereby recognizes packet numbers for which reception processing can be skipped (for which wait for reception is not required) and forwards the information about the recognition to the receiving window controller 37. The receiving window controller 37 can carry out window control based on the information and send the user packets in the packet buffer 33 to the application controller 38 at appropriate timings.

In other words, the packet-skip-notifying-signal decoder 36 of the UE 3 functions as receiving means which receives, from the target base station 1-2, notification information notifying an amount of packets corresponding to the difference between the estimated packet number (offset value) and the number of forwarded packets from the source base station 1-1 does not exist. In addition, the receiving window controller 37 functions as reception control means which skips reception processing for data not existing on the basis of the notification information.

As described above, the target base station 1-2 estimates the number of packets forwarded from the source base station 1-1, successively provides packets which have been received from the gateway node 2 and which are destined for the UE 3 with numbers obtained by adding an offset value corresponding to the estimated number of packets to the forward order numbers used (provided) by the source base station 1-1 and then successively sends the packets to the UE 3. With this configuration, the target base station 1-2 can forward, to the UE 3, packet from the gateway node 2 before the completion of packet forwarding from the source base station 1-1 even when the target base station 1-2 does not grasp the forward order number of the last forwarding packet (i.e., without requiring detection of the last packet). Thereby, the packet loss and the packet forward delay can be lightened.

The LTE system is based on the premise that received packets are re-ordered in the UE 3, and therefore the use of the offset value makes it possible to prevent the forward order number system determined by the source base station 1-1 from being disturbed. Accordingly, the UE 3 can accurately re-orders the received packets without requiring special process which absorbs inverse and redundancy of forward order numbers between packets forwarded from the source base station 1-1 and packets from the gateway node 2.

In addition, when the estimated value (the estimated packet number) of the number of forwarding packets to the target base station 1-2 has a difference from the number of packets actually forwarded, the target base station 1-2 calculates the difference and creates dummy packets as many as the difference, successively provides the dummy packets with forward order numbers starting from a number obtained through adding "+1" to the forward order number provided to the last forwarding packet, and sends the dummy packets to the UE 3. Thereby, it is possible to occupy the difference (empty numbers) of the packet forward order numbers so that the UE 3 can correctly re-order received packets received therein.

As an alternative to creating and transmitting of such dummy packets, the target base station 1-2 notifies the UE 3 of empty numbers of the forward order number information which empty numbers correspond to the above difference via the packet skip notification information. With this notification information, the UE 3 can cancel the stand-by station for receiving packets not to be forwarded so that the reception processing can be proceeded and unnecessary reception processing can be eliminated.

### (2) others:

The above first embodiment determines the offset value based on the estimation of the number of packets to be forwarded from the source base station 1-1 to the target base station 1-2 with the intention that delay in packet forwarding is reduced. Alternatively, delay in packet forwarding may be reduced by controlling the setting value of the last forwarding packet detection timer (T1 timer) on the basis of the estimated packet number n, and thereby controlling the sending start timing of packets which are destined for the UE 3 and which have been received from the gateway node 2.

For example, assuming that the target base station 1-2 estimates the estimated packet number to be n and time required for forwarding a single packet is x milliseconds, the setting value of the T1 timer can be "n×x".

Further, the first embodiment estimates the offset value in the target base station 1-2. Alternatively, the offset value may be a constant value. For example, the offset value to be used by the target base station 1-2 may be set to be identical to the maximum number of packets that the packet buffer 14 of the source base station 1-1 is afford to retain.

In the first embodiment, the creating and sending of empty packets are substituted by sending the packet skip notification signal. Alternatively, the both manner may be selectively carried out. For example, such a control manner may be carried out: when the difference between the estimated packet number and the number of packets actually forwarded is less than a specified threshold value and therefore the number of empty packets to be sent is small, the empty packets are sent; while when the difference is the specified value or more which means the number of empty packets to be sent is large, the packet skip notification signal is sent (*vice versa*).

As detailed above, the present invention can reduce the delay in packet forwarding in a handover process, maintaining a forward order number (sequence number) system between packets forwarded from the source base station to the target base station and packets sent from the upper apparatus to the target base station. With this configuration, the present invention seems to be extremely useful in wireless communication technology.

## Claims

1. A method for handover in a wireless communication system wherein, during a handover process in which a wireless terminal changes a communication destination from a first wireless base station to a second wireless base station, first data which the first wireless base station has received from an upper apparatus but which the first wireless base station has not finished sending to the wireless terminal is forwarded to the second wireless base station, the method comprising:
at the first wireless base station,
sending the second wireless base station first forward order information provided to the first data;
at the second wireless base station,
sending the wireless terminal the first data forwarded from the first wireless base station;
proving second forward order information obtained through adding an offset value to the first forward order information to second data which the second wireless station has received from the upper apparatus and which is destined for the wireless terminal; and
sending the wireless terminal the second data along with the second forward order information.

2. The method for handover according to claim 1,
wherein the first wireless base station sends, as the first forward order information, a maximum forward order provided to the first data to the second wireless base station.

3. The method for handover according to claim 1, further comprising:
at the first wireless base station,
sending the second wireless station information about one of or both an amount of buffering of the first data and a receiving rate of the first data when received from the upper apparatus;
at the second wireless base station,
estimating, based on the information received from the first wireless base station, a first amount of the first data that is to be forwarded from the first wireless base station; and
determining the offset value based on the result of the estimating.

4. The method for handover according to claim 3, further comprising:
at the second wireless base station,
calculating a difference between the determined offset value and the first amount of the first data forwarded from the first wireless base station;
creating empty data having an amount corresponding to the difference;
successively providing third forward order information in a range of occupying the offset value to the empty data; and
sending the wireless terminal the empty data along with the third forward order information.

5. The method for handover according to claim 3, further comprising:
at the second wireless base station,
calculating a difference between the determined offset value and the first amount of the first data forwarded from the first wireless base station;
sending the wireless terminal notification information notifying that an amount of data corresponding to the difference does not exist.

6. The method for handover according to claim 5, further comprising, at the wireless terminal, skipping reception processing for a time period corresponding to the time for which the wireless terminal receives empty data having an amount corresponding to the difference.

7. A method for handover in a wireless communication system wherein, during a handover process in which a wireless terminal changes a communication destination from a first wireless base station to a second wireless base station, first data which the first wireless base station has received from an upper apparatus but which the first wireless base station has not finished sending to the wireless terminal is forwarded to the second wireless base station, the method comprising:
at the first wireless base station,
notifying the second wireless base station of information about a state of buffering of the first data destined for the wireless terminal;
at the second wireless base terminal,
estimating, based on the information notified from the first wireless base station, a first amount of the first data that is to be forwarded from the first wireless base station;
controlling, based on the result of the estimating, a sending start timing at which second data which has been received from the upper apparatus and which is destined for the wireless terminal is sent to the wireless terminal.

8. A wireless base station used in a wireless communication system in which, during a handover process in which a wireless terminal changes a communication destination from the first wireless base station to a second wireless base station, first data which the first wireless base station has received from an upper apparatus but which the first wireless base station has not finished sending to the wireless terminal is forwarded to the second wireless base station, the first wireless base station comprising:
forward order information providing means which provides first forward order information to the first data received from the upper apparatus; and
sending means which sends the first forward order information provided by the forward order information providing means to the second wireless base station.

9. The wireless base station according to claim 8,
wherein the sending means sends, as the first forward order information, a maximum forward order which has been provided to the first data to the second wireless base station.

10. The wireless base station according to claim 8, further comprising a buffer which stores the first data received from the upper apparatus, wherein
the sending means sends the second wireless base station information about an amount of the first data in the buffer and about a receiving rate of the first data when received from the upper apparatus.

11. A wireless base station used in a wireless communication system in which, during a handover process in which a wireless terminal changes a communication destination from first wireless base station to a second wireless base station, first data which the first wireless base station has received from an upper apparatus but which the first wireless base station has not finished sending to the wireless terminal is forwarded to the second wireless base station, the second wireless base station comprising:
receiving means which receives, from the first wireless base station, first forward order information that the first wireless base station has provided to the first data from the first wireless base station;
forward order information providing means which provides second order information obtained through adding an offset value to the first forward order information to second data which the second wireless base station has received from the upper apparatus and which is destined for the wireless terminal; and
sending means which sends the wireless terminal the first data forwarded from the first wireless base station and the second data to which the forward order information providing means has provided the second forward order information.

12. The wireless base station according to claim 11,
wherein:
the receiving means receives information about an amount of buffering of the first data in the first wireless base station and about a receiving rate of the first data when the first wireless base station has received the first data from the upper apparatus; and
the forward order information providing means comprising
an estimating unit which estimates, based on the information received from the first wireless base station, a first amount of the first data that is to be forwarded from the first wireless base station; and
a determining unit which determines the offset value based on the result of the estimating by estimating unit.

13. The wireless base station according to claim 12, the forward order information providing means further comprising:
a difference calculating unit which calculates a difference between the first amount estimated by the estimating unit and an amount of the first data which has been forwarded from the first wireless base station and which has been received by the receiving means; and
an empty data creating unit which creates empty data having an amount corresponding to the difference,
the forward order information providing means successively providing third forward order information in a range of occupying the offset value to the empty data.

14. The wireless base station according to claim 12, the forward order information providing means comprising:
a difference calculating unit which calculates a difference between the first amount estimated by the estimating unit and an amount of the first data which has been forwarded from the first wireless base; and
a notifying unit which sends the wireless terminal notification information notifying that an amount of data corresponding to the difference does not exist.

15. A wireless terminal used in a wireless communication system wherein, during a handover process in which the wireless terminal changes a communication destination from a first wireless base station to a second wireless base station, first data which the first wireless base station has received from an upper apparatus but which has not finished sending to the wireless terminal is forwarded to the second wireless base station, the wireless terminal comprising:
receiving means which receives, from the second wireless base station, notification information notifying that an amount of data corresponding to a difference between an offset value of forward order information of the first data and the first data forwarded form the first wireless base station does not exist; and
reception control means which skips reception processing that is to be performed on the data which does not exist based on the notification information.
